# EUROPEAN PATENT APPLICATION

(11) **EP 3 395 928 A1**
(43) Date of publication of application: **31.10.2018**
(21) Application number: 17168168.7
(22) Date of filing: 26.04.2017
(51) Int. Cl.: C09K 21/02, C09K 21/14, B32B 17/10

(54) **FIRE RESISTANT ELEMENT**

(71) Applicant: Saint-Gobain Glass France, 92400 Courbevoie (FR)
(72) Inventor: TE STRAKE, David, 52070 Aachen (DE)
(74) Representative: Frei Patent Attorneys

(57) **Abstract**

The fire resistant interlayer (1) for use in a fire resistant element is suitable for use in a fire resistant element (5). The fire resistant interlayer (1) is arrangable between two support elements (2). The fire resistant interlayer (1) is a silicon based polymer, wherein said polymer is polymerised from staring component comprising silicon. In particular said polymer is polymerised from a dispersion of SiO2 nanoparticles (3), and/or silicic acid, a silane compound; in particular halogenated silane, in particular chlorinated silane and/or fluorinated silane; a silanol compound, a siloxane compound a derivate thereof and/or a mixture thereof dissolved, dispersed and/or emulsified a solvent.

## Description

The invention relates to the field of fire resistant element. It relates to an element that protects from fire, and a transparent fire resistant interlayer arrangable between support elements, and a method to manufacture a fire resistant element and a method for manufacturing a transparent fire protection layer as described in the preamble of the independent claims.

Fire resistant glazings are well known in the state of the art. For example US 5223313 discloses a fire resistant glazing consisting of at least two parallel glass panes held apart from one another, between which is disposed a layer of a hydrogel, the aqueous phase of which contains a dissolved salt, the solid phase of the hydrogel consists of the polymerized carbon based monomer. Further hydrogel bases fire protection glazing are known from US 2016/108661 and US 2016/200077. Hydrogel based, fire resistant glasses are already available on the market. Today, this Hydrogels are based on organic, carbon based Polymers like Polyacrylates, Polymethacrylates or Copolymers. These materials typically show insufficient aging behaviour regarding UV resistance and high temperature resistance.

Besides carbon based hydrogel interlayers between the glass panes also another type of interlayer for fire resistant glasses is known. Such an alternative interlayer is based on Alkali-silicate-waterglass. Such an alkali-silicate interlayer provides the best resistance to fire in relation to the interlayer thickness. Nevertheless, due to the high pH value of the alkali-silicate interlayer, glass corrosion is a major disadvantage in fire resistant glazings using the alkali-silicate interlayer.

It is an object of the invention to create an element to protect from fire and a fire protection interlayer arrangable between support elements, and a method to manufacture a fire resistant element, which proposes an improved solution to protect from fire.

These objects are achieved by a fire protection element, and a fire protection interlayer arrangable between support elements, and a method to manufacture a fire resistant element and a method for manufacturing a transparent fire resistant layer according to the independent claims.

The fire resistant interlayer for use in a fire resistant element is suitable for use in a fire resistant element. The fire resistant interlayer is arrangable between at least two support elements. The fire resistant interlayer is a silicon based polymer gel, wherein said polymer gel is polymerised from a staring component comprising silicon. In particular said polymer is polymerised from dispersion of SiO2 (SiO2) nanoparticles, and/or silicic acid, a silane compound; in particular halogenated silane, also called silicon halide, in particular chlorinated silane and/or fluorinated silane; a silanol compound, a siloxane compound, a derivate thereof and/or a mixture thereof. In other words: The starting component comprising silicon can be a dispersion of SiO2 (SiO2) nanoparticles, and/or silicic acid, a silane compound; in particular a halogenated silane compound, in particular a chlorinated silane compound and/or fluorinated silane compound; a silanol compound, a siloxane compound, a derivate thereof and/or a mixture thereof. The fire resistant interlayer can be a transparent and/or transluscent.

A silicon based polymer gel comprises the starting component being soluble, emulsifiable and/or dispersible in a solvent. The solvent can be a liquid. The solvent can also be called vehicle. The vehicle is medium in which the starting component is delivered respectively carried. The vehicle can act as carrier for the starting component, in particular for the active starting component.
The fire resistant interlayer is a silicon based gel respectively silicon based polymer gel. The starting component (SiO₂ nanoparticles, silicic acid, silane compound, silanol compound, siloxane compound) can be dispersible, emulsifiable and/or dissolvable in the solvent respectively the vehicle, in particular being water and/or alcohol or a mixture thereof. The dissolved, emulsified and/or dispersed starting component is not linked respectively not cured and/or crosslinked. In particular the solvent dispersed Si02 nanoparticles are not linked respectively not cured and/or crosslinked to each other. The siloxane compound can be dissolved, emulsified and/or dispersed in the solvent respectively carried by the vehicle. The siloxane monomer, the silane compound and/or the silanol compound can be soluble, emulsifiable and/or dispersable in the solvent. In particular the silane monomer, the siloxane monomer and/or silanol monomer and/or a derivate thereof and/or a mixture thereof can be soluble in water, alcohol and/or a mixture thereof. The silicic acid and/or a derivative thereof can be dissolved, emulsified and/or dispersed in the solvent and/or vehicle.
After polymerisation of the starting components the cured respectively crosslinked silicon based polymer is insoluble in the solvent. Thereby the solvent is enclosed in the silicon based polymer. In other words: The silicon based polymer can be viewed as a solid material composed of a liquid phase (solvent) entrapped in a three-dimensionally cross-linked network of the polymerised starting component. The silicon based network with the enclosed liquid phase can be the silicon bases polymer gel respectively can be the fire resistant interlayer. In contrast to an organic, carbon based hydrogel (i.e. polyacrylate, polymethacrylate and/or copolymers) the silicon based polymer gel exhibits an improved aging behaviour with respect to UV-resistance and a high temperature resistance.

The dispersion of SiO2 nanoparticles is a heterogenic mixture of the fine distributed staring component (dispersed phase/SiO2 nanoparticles) and a dispersion medium (solvent, vehicle). The polymer can be polymerised from dissolved silicic acid. The silicic acid is dissolved in a solvent. Said dissolved silicic acid is freely mobile in the solvent. The silicon based polymer can be polymerised from the siloxane compound. The staring component, in particular the silicic acid, the silane compound, the silanol compound, the siloxane compound, a derivative thereof and/or a mixture thereof, can be carried in a two-phase system. The two-phase system can be a heterogeneous two-phase system. The two-phase system can be a liquid two phase system.

The siloxane and/or the silanol compound can be a silane compound and/or a silane derivative.

In general the silicon based polymer is a solid material in a physical sense. The polymer does not exhibit viscose properties. The solvent can be any kind of liquid. The silicon based polymer can be polymerised from a sol.

The silicon based polymer can be polymerised form the starting component comprising silicon. The staring component can comprise a silanol group, a silane group, a halogen silane group, a siloxane group, and/or a mixture thereof and/or a derivative of thereof. The silicon based polymer gel respectively the silicon base polymer can be polymerised from the staring component being a silanol following a polycondensation reaction of the starting component, as follows

R₃ - Si-OH + H⁺ → R₃-Si-OH₂⁺

R₃-Si-OH₂⁺ → R₃-Si-O-Si-R₃ + H₂O

where R can independently be selected from a group comprising: hydrogen, hydroxyl group, organyl group, alkyl group, aryl group, acyl group, alkenyl group, alkynyl group, silicic acid, colloidal silica, organosilicon, siloxane group, an organic acid, a derivative thereof and/or a mixture thereof. The skilled person can adapt the reaction mechanism of the polycondensation of the silanol compound for other starting components.

This reaction can take place at room temperature.
Due to the tetrahedral structure of silicon it is possible to form three-dimensional networks whereby the solvent respectively the vehicle, in particular water and/or ethanol, is locked in between the network of polymerized SiO₂.

The silanol compound can be a derivative of a silane, wherein at least one hydroxyl group is bound to a silicon atom. The silanol compound can be obtained by hydrolysis of halogenated silanes, alkoxysilanes, or aminosilanes. Chlorosilanes are the most common reactants. The silanol compound can also be obtained by oxidation of silyl hydrides.

The silicon based polymer originate from silan polymer and/or derivatives thereof. The silicon based polymer can be at least one of a poly silicic acid, a silicon silicic acid polymer, a silan polymer, a poly (organo) siloxane, colloidal silica.

The silicon based polymer gel can be a silicon based hydrogel, by utilising water as solvent. in other word: The polymer can be a silicon based hydrogel, wherein the hydrogel can be polymerised from an aqueous dispersion, emulsion and/or solution of the starting component, in particular from an aqueous dispersion of SiO2 nanoparticles, silicic acid, the silane compund, the silanol compound, siloxane compound, a derivative thereof and/or a mixture thereof dissolved, dispersed and/or emulsified in water. The hydrogel comprises a water soluble, water emulsifiable and/or water dispersible starting component. The hydrogel is a silicon based hydrogel. For example, the SiO2 nanoparticles are dispersible in water. The water dispersed SiO2 nanoparticles are not linked respectively not cured and/or crosslinked to each other. After polymerisation of the starting components the cured respectively crosslinked hydrogel is insoluble in water. Thereby water is enclosed in the hydrogel. The enclosed water can improve the fire resistant properties of the interlayer.

The solvent of the starting component can be alcohol. The alcohol can be enclose in a silicon based alcogel. The alcogel can comprise a polyol and/or a monohydric alcohol.

The support elements can be an element supporting the interlayer. The supporting element can be a plaserbord and/or a glass pane, in particular flat glass pane. Ceramic glass can also be used as support element, and special bent glass can be applied. Thermally or possibly chemically prestressed glass panes are particularly favourable. The support element can be based on polymer (e.g. from polycarbonates or polymethyl methacrylate (PMMA; acrylic glass), partially crystalline glass (ceramic glass) or composite systems with glass panes and plastic carriers, are also considered as alternatives to glass panes based on silicon oxide. Also laminated support elements can be applied.

The fire resistant interlayer can be transparent and/or translucent. This means that light can shine through the fire resistant interlayer. Independently thereof, the supporting element can be transparent and/or translucent. This means that light can shine through the support element. A transparent interlayer in a combined use with transparent supporting elements can provide a fire resistant glazing.

A fire resistant element can be a fire protection element. The term fire-protection element respectively fire resistant element is not to be understood as being limited to certain materials (specifically: glass in the narrow context), but includes constructions with support elements of the above mentioned and other materials. In particular the fire resistant element can be a fire protection glazing - not restricted to the supporting element comprising glass in a narrow sense.

The fire resistance or heat resistance respectively fire protection or fire resistance can be considered as the ability of the element respectively glazing to form an effective barrier against the spread of flames, smoke and hot streets and/or prevent the transmission of heat radiation. A fire resistance respectively fire resistance duration is defined as the minimum lifetime during which the fire resistant element under examination meets standardized requirements including defined boundary conditions (EN 1364 and EN 1363, date of 2017) and certain temperature stress. For example, such standard requirements of EN 13505 are listed respectively defined. These requirements allow the classification of fire protection elements as fire resistant element. The fire resistance is thus a measure of the usability of the element in case of fire. In other words: during the fire resistance duration the passage of fire through the fire resistant element is prevented. Thus a physical barrier for fire under fire conditions (EN 1363 and EN 1364) is ensured. In addition to the physical fire barrier the fire resistant element can provide respectively fulfil additional functions such as for example a heat insulation.

The interval during which the fire resistant interlayer respectively fire resistant element is tested (according to the corresponding standards requirements), allows classification of the fire resistant element. The fire resistant elements can be classified as follows according to the standard EN 13501 (as of December 2013). For example, the following classes are distinguished:
Classification E (fire integrity: smoke and fire-tight room closure) classifies space-confining structural elements according to their guarantee a tightness against smoke and hot gases.
Classification EW (smoke and fire-tight room closure and insulation) specifies the heat insulation properties under influence of fire, with a reduction of the heat radiation.
Classification EI (smoke and fire-tight room closure and isolation) specifies space-confining structural elements according to their ability to meet the requirements of class E and additionally form an insulation against heat (radiation, heat conduction). Thereby the average temperature must not be increase by 140 K on the cold side and the maximum temperature rise on the cold side must not exceed <180 K. The EI classification is thus applicable only if the exterior of the fire protection construction element remains below 200°C for a certain time (fire resistance duration) on the side facing away for the fire (cold side). The cold side is heated by 180 K maximum. For example, a fire protection construction element of the class EI 30 can withstand a fire for 30 minutes, a fire protection construction element of the class EI 90 can withstand a fire for at least 90 minutes and limits the temperature on the cold side to a maximum of 200°C during this time. The fire resistant element can be an EI-rated element. In particular the fire resistant element provide a smoke and fire-tight room closure and isolation for at least 10 Minutes, in particular at least 30 minutes. The fire resistant element can be classified at least as EI 10, in particular at least EI 30, element.

Classification times for the fire resistant element are specified for each classification in minutes, wherein the classifying times: 10, 15, 20, 30, 45, 60, 90, 120, 180, 240 or 360 are to be used. The fire resistance duration/period is thus defined to be at least 10 minutes. In general, a fire resistant element thus fulfills at least 10 minutes the appropriate criteria or requirements (see Classification - EN 13501, date of December 2013) for fire resistance. The minimum criterion is the physical fire barrier (fire integrity: smoke and fire-tight room closure). A fire resistant element must therefore be classified at least as E10.

The SiO2 nanoparticles can be capable to perform an autopolymerisation resulting in the silicon based polymerised polymer gel interlayer, in particular in the silicon based hydrogel. Such an autopolymerisation is a polymerisation reaction initiated without the addition of an additional respectively external catalyst. The autopolymerisation can be accomplished by chemical means without external interference.

The SiO2 nanoparticles can be stabilised, wherein a destabilising agent can be present for initiating a polymerisation of the SiO2 nanoparticles. In particular the SiO2 nanoparticles can be stabilised in a cationic manner, in particular the SiO2 nanoparticles can be stabilised by alkali-cations, in particular the SiO2 nanoparticles can stabilised by sodium-ions. A destabilising agent can be present for starting/during polymerisation of the SiO2 nanoparticles. The destabilising agent can be an anionic agent, in particular the destabilising agent can be an acid, in particular the destabilising agent being hydrochloric acid. In other words: The SiO2 nanoparticles can be destabilised by a destabilising agent for initiating the polymerisation and formation of the silicon based hydrogel. Due to the controlled destabilisation of the dispersion of SiO2 nanoparticles, in particular of the aqueous dispersion of SiO2 nanoparticles, a three dimensional network of xSiO₂-yH₂O is formed, being the silicon based polymer gel, in particular the silicon based hydrogel.

The SiO2 nanoparticles of the dispersion of SiO2 nanoparticles can have a particle size of less or equal to 25 nm, in particular of 7-12 nm, in particular 3-10 nm. Is allows for respectively favours the polymerisation of a transparent respectively translucent silicon based polymer gel. Such a particle size is preferable for a transparent and/or translucent fire resistant interlayer. The transparent interlayer can be applied for fire resistant glazing, and can improve the aging stability of the fire resistant glazing. The usage of SiO2 nanoparticles with a particle size greater than 25 nm can lead to an opaque, non-transparent, interlayer. Those non-transparent interlayer are rather applied in combination with a non-transparent support element instead of a transparent support element.

The pH value of the polymerised silicon based polymer gel interlayer; in particular the hydrogel interlayer; can be less or equal to 6. Such a low pH can improve the aging stability of the fire resistant element as the corrosion, in particular the glass corrosion, of the support element can be reduced. The pH value of the polymer gel interlayer can be less than 7.

The silicon based polymer gel, in particular the silicon based hydrogel, can be essentially dimensionally stable. Due to the dimensional stability of the polymer a spreading of the at least two support elements can be minimised respectively inhibited. The dimensional stability results from the solid character of the polymerised polymer respectively the polymer gel. In other words: The silicon based polymer respectively polymer gel is a solid material in a physical sense. The polymer gel does not exhibit viscose properties. The dimensional stability of the silicon based polymer gel inhibits a so called cold flow of the fire resistant interlayer. Said cold flow could cause the support elements to be spread apart over time due to an internal pressure build up between the at least two support elements of the fire resistant element.

The silicon based polymer respectively the silicon based polymer gel, in particular the silicon based hydrogel, can be a poly-silicic-acid based polymer respectively a poly-silicic-acid based polymer gel, in particular a silicic-acid based hydrogel. Accordingly, the silicon based polymer can be polymerised from silicic acid, in particular from silicic acid nanoparticles (Si02-nanoparticles), as a polycondensation reaction of silicic acid (Si(OH)₄):

(OH)₃ - Si-OH + H⁺ → (OH)₃-Si-OH₂⁺

2(OH)₃-Si-OH₂⁺ → (OH)₃-Si-O-Si-(OH)₃ + H₂O

This reaction can take place at room temperature.
Due to the tetrahedral structure of silicon respectively silicate it is possible to form three-dimensional networks whereby the dispersion medium, in particular water, is locked in between the network of polymerized SiO₂.

The fire resistant element comprises at least two support elements and the fire resistant interlayer. The two support elements are arranged essentially parallel to each other. The fire resistant interlayer is arranged between the support elements.

The support elements and/or the interlayer can be transparent and/or translucent as described above, to provide a fire resistant glazing.

At least one of the support elements can comprise a primer layer on a flat side facing the fire resistant interlayer. Said primer layer can alter the adhesion of the interlayer on the support element.

The primer can be a layer of organofunctional silane arranged at the flat side which faces the fire resistant interlayer. The primer, in particular the organofunctional silane, can be deposited onto the support element for example by way of spraying on, a roller application or wiping on.

By way of this, it is possible that the adhesion of the fire resistant interlayer on the support element can be improved even further. The further improved adhesion has an advantageous effect on the fire resistant properties of the fire protection element, since the fire resistant interlayer in the case of a fire after a shattering of the support element facing the fire remains bonded on the at least one remaining support element and provides a thermal insulation. The primer, in particular the organofunctional silane, can also be called a functionalised primer, in particular functionalised silane.

The primer layer is advantageously a monomolecular layer. This can be realised with the help of a greatly diluted solution of the functionalised primer in a highly volatile solvent, such as propanol or isopropanol for example, or a propanol-water mixture. A direct and stable connection to the support element can be created by way of the monomolecular layer since no intermediate layers compromise this connection.

The primer, in particular the organofunctional silane, can moreover form a covalent bond with the fire resistant interlayer. Such a covalent bond in contrast to purely polar interactions can only be broken by application of a high amount of energy. The fire resistant interlayer adheres to the coated support element particularly well on account of this. A huge amount of thermal energy is present in the case of a fire, by which means on the one hand the covalent bonding between the fire resistant interlayer and the functionalised primer on the side facing the fire can be broken, and the possibly shattering support element can detach from the fire-protection layer. On the other hand, the bonding between the fire resistant interlayer and the functional primer on the side which is away from the fire is retained, by which means the thermal insulation of the fire-protection glazing continues to be maintained.

Not only can the initiated polymerisation take place within the fire resistant interlayer but also spill over onto the functionalised primer, in particular onto the functionalised silane, in the case that the primer, in particular the organofunctional silane, comprises at least a double bond on the side facing away from the support element. The fire resistant interlayer adheres particularly well to the support element due to this cross-linking between the fire resistant interlayer and the primer, in particular the functionalised silane, and thus with the support element, and this entails the already mentioned advantages. Such a primer, in particular functionalised silane, with at least one double bond can for example be a vinyl silane, in particular vinyl-tri-ethoxy-silane, vinyltrimethoxysilane, 3-acryloxypropyltrimethoxysilane and 3-methacryloxypropyltrimethoxysilane, 3-acryloxypropyltrimethoxysilane, vinyl-trichorosilane, vinyltrimethoxysilane, vinyltriethoxysilane, vinyltri(2-methoxy-ethoxy)silane, vinyltriisopropyl silane, vinyltris(tert-butylperoxy)silane, vinyl-dimethylchlorosilane, vinyldimethoxysilane, vinyldichlorosilane, vinylmethyl-dimethoxysilane, vinyldiethoxysilane, (methacryloxymethyl)methyldimethoxysilane, methacryloxymethyltrimethoxysilane, 3-methacryloxypropyltriacetoxysilane, 3-methacryloxypropyltrimethoxysilane, vinyltriacetoxysilane.

The support element comprises two substantially parallel major surface areas, said major surface areas are also called flat sides. The edges of the two flat sides are connected to each other via an end side. The end side has a smaller surface area than the flat sides and the dimension of the end side corresponds to the thickness of the support element. In this text the term 'end face' is used for the circumferential area between the two flat sides, which is also called "edge" or "narrow side" of a support element, or a surface thereof. An edge region extends not only via the end face of the supporting element but also spreads over a region of the flat side adjacent to the end side.
In case of fire, the support element facing the fire would break and expose the silicon based polymer, in particular the silicon based hydrogel, to the fire. Evaporating solvent would cool the support element on the protection side and a Si02 residue would remain on the support element. Depending on the structure of that residue it could provide isolating properties in order to avoid heat transfer through the support element. The residue has an extremely high melting point and could potentially resist high temperature for longer times than carbon based hydrogels could do. Carbon based polymers can resist temperatures up to approximately 400°C.

In contrast to that silicon based polymer gel, in particular the silicon based hydrogel, can have a melting point of at least 1000°C, in particular of at least 1500°C, in particular of at least 1700°C, in particular of 1713°C. Hence, the silicon based polymer, in particular the silicon based hydrogel, can have an extremely high melting point and could potentially resist high temperature for longer times than carbon based hydrogels in case of fire. Accordingly, the silicon bases polymer, in particular the silicon based hydrogel, can provide an increased fire resistance for the fire resistant element.

The fire resistant element can be provided with a multiple support elements. Between the support elements the fire resistant interlayer can be arranged. The simplest structure of the fire resistant element would be the fire resistant interlayer arranged between two neighbouring support elements. In a more complex structure the fire resistant element comprises a variety of support elements, wherein between the support elements an independent interlayer is arranged. For example two independent fire resistant interlayers can be arranged three neighbouring support elements, being spaced from each other. Naturally, it is possible that the fire resistant element can be combined with an isolation and/or insulation module. For example be combining a two and/or three sheeted fire resistant element with an isolation and/or insulation module. Said isolation and/or insulation module can be provide as sealed cavity space, being provided between one support element of the fire resistant element and an additional support element. The sealed cavity space can be filled with an inert gas, for improving isolation and/or insulation properties.

The method for manufacturing a fire resistant element, in particular the fire resistant element as described above, comprises the steps of:
- providing at least one first support element and at least one edge limitation, said edge limitation is arranged peripheral along the edge of the first support element, so that the first support element and the edge limitation form a receptacle;
- providing a starting component comprising silicon, in particular a dispersion of SiO₂ nanoparticles, and/or silicic acid, a silane compound; in particular halogenated silane, in particular chlorinated silane and/or fluorinated silane; a silanol compound, a siloxane compound, a derivate thereof and/or a mixture thereof,
- filling the starting component, in particular the dispersion of SiO₂ nanoparticles, and/or silicic acid, the silane compound; in particular halogenated silane, in particular chlorinated silane and/or fluorinated silane; the silanol compound, the siloxane compound, the derivate thereof and/or a mixture thereof, into the receptacle;
- polymerise staring component, in particular a dispersion of SiO₂ nanoparticles, and/or silicic acid, a silane compound; in particular halogenated silane, in particular chlorinated silane and/or fluorinated silane; a silanol compound, a siloxane compound, a derivate thereof and/or a mixture thereof, to form a silicon based polymer gel, in particular a silicon based hydrogel, to/as a fire resistant interlayer in the fire resistant element.

The aqueous dispersion can be the aqueous dispersion as described above.

The first support element can be provided together with at least one second support element. Said second support element can be spaced from the first support element, in particular at an equal distance. The edge limitation can be an edge sealing between the first and the second support element and said edge limitation is arranged peripheral along their edge. The starting material, in particular a dispersion of SiO₂ nanoparticles, and/or silicic acid, a silane compound; in particular halogenated silane, in particular chlorinated silane and/or fluorinated silane; a silanol compound, a siloxane compound a derivate thereof and/or a mixture thereof, can be filled into a space before a polymerisation. Said space is formed between the first and the second support element and forms the receptacle.

The first and/or the second support element can be transparent and/or translucent, as the two support element described above. Additionally, the polymerised dispersion and/or the dissolved silicic acid can be transparent and/or translucent, as described above. Furthermore, the fire resistant element can be transparent and/or translucent. The fire resistant element can be a fire resistant glazing.

The SiO2-nanoparticles can have a particle size of less or equal to 25 nm, in particular of 7-12 nm, in particular 3-10 nm.

In an additional step, a primer can deposited onto at least one support element on a flat side which faces the fire resistant interlayer, before the support element is brought into contact with the starting component, in particular a dispersion of SiO2 nanoparticles (3), and/or silicic acid, a silane compound; in particular halogenated silane, in particular chlorinated silane and/or fluorinated silane; a silanol compound, a siloxane compound, a derivate thereof and/or a mixture thereof. The at least one first support element and/or at least one of the second support elements can be designed as a glass pane.

The fire resistant interlayer, in particular as described above, in particular a transparent interlayer, can be manufactured by a method comprising the steps of:
- providing a starting component comprising silicon, in particular a dispersion of SiO2 nanoparticles (3), and/or silicic acid, a silane compound; in particular halogenated silane, in particular chlorinated silane and/or fluorinated silane; a silanol compound, a siloxane compound, a derivate thereof and/or a mixture thereof dissolved, dispersed and/or emulsified in water, wherein in particular the dispersion of SiO2 nanoparticles comprises SiO2 nanoparticles having a particle size of less than or equal to 25 nm; and
- polymerise the starting component, in particular a dispersion of SiO2 nanoparticles (3), and/or silicic acid, a silane compound; in particular halogenated silane, in particular chlorinated silane and/or fluorinated silane; a silanol compound, a siloxane compound a derivate thereof and/or a mixture thereof dissolved, dispersed and/or emulsified in a solvent, as silicon based polymer gel, in particular as silicon based hydrogel.

Further preferred embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which schematically shows:

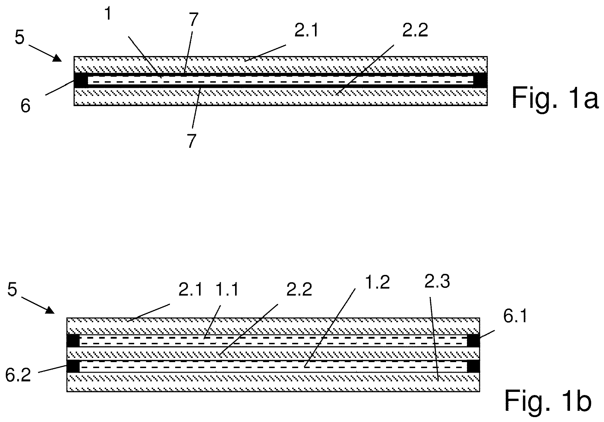

Fig. 1a and Fig.1b different assemblies of a fire resistant element.

In principle, identical parts are provided with the same reference symbols in the figures.

While the invention has been described in present preferred embodiments of the invention, it is distinctly understood that the invention is not limited thereto, but may be otherwise variously embodied and practised within the scope of the claims.

Figure 1, in particular figures 1a and 1b, schematically shows the structure of a fire resistant element 5, which comprises a fire resistant interlayer 1 based on a silicon based polymer 10, in particular a silicon based hydrogel. The figures show:
□ Figure 1a: A fire resistant element 5 with two support elements 2.1, 2.2 with a fire resistant interlayer 1 arranged there between with an edge limitation 6 respectively an edge sealing. The fire resistant element 5 can be manufactured for example by way of curing the educts of the fire resistant interlayer 1 which are first filled in fluid form into the intermediate space/receptacle defined with the help of the edge limitation 6 (edge sealing), between the support elements 2.1, 2.2 and are cured there. The support elements 2.1, 2.2 comprise a primer 7 at the flat side which faces the fire resistant interlayer 1.. The primer can alternatively also be deposited only onto one of the two support elements 2.
□ Figure 1b: A fire resistant element 5 with three support elements 2.1, 2.2, 2.3 with fire resistant interlayers 1.1, 1.2 arranged in between the support elements, and each with an edge limitation 6.1, 6.2. A fire resistant element 5 with more than three support elements 2.1, 2.2, 2.3 and more than two fire resistant interlayers 1.1, 1.2 are also possible.

A few examples for the manufacture of a fire resistant element 5 respectively the fire resistant interlayer are specified hereinafter in Table 1.

**Table 1: Composition of the educts of the polymerised, silicon based polymer.**

| Probe | A [%]^{a} | B [%]^{b} | C [%]^{c} | D [%] |
|---|---|---|---|---|
| 1 | 61,9 | 12,4 | 0,9 | 24,8^{d1} |
| 2 | 62,0 | 12,4 | 0,8 | 24,8^{d2} |
| 3 | 70,4 | 28,2 | 1,4 | 0 |
| 4 | 70,9 | 28,4 | 0,7 | 0 |
| 5 | 99,0 | 0 | 1,0 | 0 |

| | | | | |
|---|---|---|---|---|
| a - starting component containing silicon, w[silicon containing starting component]=30%; b - water; c - HCl (37%); d1 - saturated boric acid solution; d2 - saturated solution of borax. | | | | |

Table 1 shows the composition of the educts, the compositions are polymerised as the silicon based polymer. The share of the several educts A-D is given in percent by weight (% respectively wt%). Component A is a starting component containing silicon with 30 wt% starting component containing silicon, educt B is water (H2O respectively H₂O), educt C is 37% hydrochloric acid and D is an additive, being for example d1 saturated boric acid solution or d2 saturated solution of borax. The component A can be dissolved, emulsified and/or dispersed in a solvent respectively carried by a vehicle. The component A can be a SiO2 nanoparticle dispersion with 30wt% SiO2. The component A can be a solution, emulsion and/or dispersion of silicic acid, a silane compound; in particular halogenated silane, in particular chlorinated silane and/or fluorinated silane; a silanol compound, a siloxane compound a derivate thereof and/or a mixture thereof, wherein the content of the silicon comprising component is 30wt%. The content of the silicon comprising starting component can be varied. Furthermore, the composition of the educts of the polymerised, silicon based polymer can be varied.

Other additives as for example sodium chloride, Magnesium chloride, boron compounds, stannates, aluminium hydroxide compounds, magnesium hydroxide compounds etc. can also be used.

Furthermore, other solvents respectively dispersion/emulsion media, and/or vehicle can be used, such as alcohols, polyols, organic solvents etc.

The silicon based polymer gel can be polymerised, respectively cured, at different temperatures.

The silicon based polymer gel comprises the silicon based polymer entrapping/enclosing the solvent respectively vehicle carrying the starting component.

## Claims

1. Fire resistant interlayer (1) for use in a fire resistant element (5),
wherein the fire resistant interlayer (1) is arrangable between at least two support elements (2),
wherein the fire resistant interlayer (1) is a silicon based polymer gel,
said silicon based polymer gel is polymerised from a starting component comprising silicon, in particular a dispersion of SiO₂ nanoparticles (3), and/or silicic acid, a silane compound; in particular halogenated silane, in particular chlorinated silane and/or fluorinated silane; a silanol compound, a siloxane compound, a derivate thereof and/or a mixture thereof.

2. Fire resistant interlayer (1) according to claim 1, wherein the silicon based polymer gel is a silicon based hydrogel, wherein the silicon based hydrogel is polymerised from an aqueous dispersion, emulsion and/or solution of the starting component, in particular from an aqueous dispersion of SiO2 nanoparticles (3), silicic acid, a silane compound; in particular a halogenated silane; a silanol compound, siloxane compound, a derivative thereof and/or a mixture thereof dissolved, dispersed and/or emulsified in water.

3. Fire resistant interlayer (1) according to any one of the previous claims, wherein the starting component is the dispersion of SiO2 nanoparticles (3), wherein the SiO2 nanoparticles (3) are capable to perform an autopolymerisation resulting in the polymerised polymer gel interlayer (1).

4. Fire resistant interlayer (1) according to any one of the previous claims, wherein the starting component is the dispersion of SiO₂ nanoparticles (3), wherein the SiO2 nanoparticles are stabilised, in particular the SiO2 nanoparticles are stabilised in a cationic manner, in particular the SiO2 nanoparticles are stabilised by alkali-cations, in particular are stabilised by sodium-ions, and
wherein a destabilising agent is present for polymerisation of the SiO2 nanoparticles, in particular the destabilising agent being an anionic agent, in particular the destabilising agent being an acid, in particular the destabilising agent being hydrochloric acid.

5. Fire resistant interlayer (1) according to any one of the previous claims, wherein the starting component is the dispersion of SiO2 nanoparticles (3), wherein the SiO2 nanoparticles have a particle size of less or equal to 25 nm, in particular of 7-12 nm, in particular 3-10 nm.

6. Fire resistant interlayer (1) according to any one of the previous claims, wherein the pH of the polymerised silicon based polymer gel interlayer (1) is less or equal to 6.

7. Fire resistant interlayer (1) according to any one of the previous claims, wherein the silicon based polymer gel, in particular a silicon based hydrogel, is essentially dimensionally stable.

8. Fire resistant interlayer (1) according to any one of the previous claims, wherein the silicon based polymer gel is a poly-silicic-acid based polymer gel.

9. Fire resistant element (5) comprising at least two support elements (2) and a transparent fire resistant interlayer (1) according to one of the previous claims, wherein the two support elements (2) are arranged essentially parallel to each other and wherein the fire resistant interlayer (1) is arranged between the support elements.

10. Fire resistant element according to claim 9, wherein at least one support element (2) comprises a primer layer (7) on a flat side facing the fire resistant interlayer (1).

11. Method for manufacturing a fire resistant element (5), comprising the steps of:
- providing at least one first support element (2) and at least one edge limitation (6),
said edge limitation (6) is arranged peripheral along the edge of the first support element (2), so that the first support element (2) and the edge limitation form a receptacle;
- providing a starting component comprising silicon, in particular a dispersion of SiO2 nanoparticles (3), and/or silicic acid, a silane compound; in particular halogenated silane, in particular chlorinated silane and/or fluorinated silane; a silanol compound, a siloxane compound, a derivate thereof and/or a mixture thereof,
- filling the starting component into the receptacle;
- polymerise the starting component to form a silicon based polymer gel as a fire resistant interlayer.

12. Method according to claim 11, wherein the first support element (2) together with at least one second support element (2) is provided,
said second support element (2) is spaced from the first support element (2), wherein the edge limitation (6) is an edge sealing between the first and the second support element (2) and said edge limitation (6) is arranged peripheral along their edge, and the starting component is filled into a space before a polymerisation, said space is formed between the first and the second support element (2) and forms the receptacle.

13. Method according to any one of claims 11-12, wherein the SiO2-nanoparticles have a particle size of less or equal to 25 nm, in particular of 7-12 nm, in particular 3-10 nm.

14. Method according to any one of the claims 11-13, wherein in an additional step, a primer (7) is deposited onto at least one support element (2) on a side which faces the fire-protection layer, before the supporting element is brought into contact with the starting component.

15. Method for manufacturing a fire resistant interlayer (1), in particular a transparent interlayer, comprising the steps of
- providing a starting component comprising silicon, in particular a dispersion of SiO2 nanoparticles (3), and/or silicic acid, a silane compound; in particular halogenated silane, in particular chlorinated silane and/or fluorinated silane; a silanol compound, a siloxane compound, a derivate thereof and/or a mixture thereof dissolved, dispersed and/or emulsified in a solvent, in particular wherein the dispersion of SiO2 nanoparticles comprises SiO2 nanoparticles having a particle size of less or equal to 25 nm;
- polymerise the staring component as silicon based polymer gel.
